# EUROPÄISCHE PATENTSCHRIFT

(11) **EP 3 215 284 B1**
(45) Veröffentlichungstag und Bekanntmachung des Hinweises auf die Patenterteilung: **23.08.2023**
(21) Anmeldenummer: 15813231.6
(22) Anmeldetag: 03.11.2015
(51) Int. Cl.: B21D 5/00, B21D 5/02, B21D 5/04, G01B 11/26

(54) **BIEGEWERKZEUG MIT BIEGEGEOMETRIE-MESSVORRICHTUNG**
BENDING TOOL COMPRISING A BENDING GEOMETRY MEASUREMENT DEVICE
OUTIL DE CINTRAGE AVEC DISPOSITIF DE MESURE DE LA GÉOMÉTRIE DE CINTRAGE

(30) Priorität: 04.11.2014 AT 507972014
(43) Veröffentlichungstag der Anmeldung: 13.09.2017
(73) Patentinhaber: TRUMPF Maschinen Austria GmbH & Co. KG., 4061 Pasching (AT)
(72) Erfinder: ANGERER, Gerhard, 4203 Altenberg (AT); FREUDENTHALER, Klemens, 4020 Linz (AT); GAGGL, Josef, 4400 Steyr (AT); HÖRL, Matthias, 6372 Oberndorf/Tirol (AT); THEIS, Helmut, 4540 Pfarrkirchen (AT); WALDHERR, Manfred, 4040 Linz (AT); WEISS, Thomas, 4020 Linz (AT)
(74) Vertreter: Burger, Hannes
(86) Internationale Anmeldenummer: PCT/AT2015/050276
(87) Internationale Veröffentlichungsnummer: WO 2016/070212

(56) Entgegenhaltungen:
- EP-A1- 0 470 263
- WO-A1-01/28706
- NL-C1- 1 007 290

## Beschreibung

Die Erfindung betrifft ein Biegewerkzeug mit einer Biegegeometrie-Messvorrichtung.

Beim Biegen von Blechteilen besteht eine große Herausforderung darin, den gewünschten Biegewinkel längs des zu biegenden Werkteils konstant einzuhalten. Der Biegedruck mit dem eine Biegepresse das Biegewerkzeug gegen den zu biegende Blechteil und folglich in das Unterwerkzeug drückt, bzw. um welchen Winkel das Biegewangenwerkzeug verschwenkt, hängt im Wesentlichen von den Materialeigenschaften des umzuformenden Werkteils ab. Aufgrund von Schwankungen der Materialparameter des umzuformenden Blechteils, insbesondere der Blechdicke, wird die nach dem Modell ermittelte Eintauchtiefe bzw. der ermittelte Verschwenkwinkel, gegebenenfalls für die aktuell durchzuführende Biegeumformung nicht korrekt sein und sich somit ein abweichender Biegewinkel einstellen.

Unter verschwenken in Bezug zum Schwenkbiegen wird hierin verstanden, dass, in Richtung der Biegelinie gesehen, die Bewegungsbahn des Biegewerkzeug einen allgemeinen Verlauf aufweisen kann. In einem speziellen Fall kann dies eine Kreisbahn sein, mit dem Klemmpunkt des Bleches durch die Niederhaltewerkzeuge als Mittelpunkt. Insbesondere kann die Bewegungsbahn auch einen komplexen Verlauf aufweisen. Somit lässt sich erreichen, dass es zu einer möglichst geringen Gleitbewegung des Bleches gegenüber dem Biegewangenwerkzeug kommt und damit eine hohe Oberflächengüte erreicht werden kann.

Es ist daher von Vorteil, wenn der aktuell erreichte Biegewinkel bereits während der Durchführung der Biegeumformung ermittelt werden kann und somit direkt für die Steuerung des Biegevorganges herangezogen werden kann.

Aus dem Stand der Technik sind Vorrichtungen bekannt, die kontaktbehaftet oder kontaktlos, den sich während der Biegung einstellenden Biegewinkel ermitteln. Beispielsweise offenbart die DE 694 01 594 T2 ein Unterwerkzeug mit einem nach oben aufklappenden Taststift. Dieser Taststift ist außerhalb der Biegekante angeordnet und liegt an der Außenseite der Biegewange an. Das Dokument offenbart ferner ein Verfahren, um eine sich beim Biegevorgang einstellende Rückfederung auszugleichen. Dazu wird die von der Biegepresse aufgebrachte Biegekraft mittels Druckaufnehmer ermittelt und ferner über eine Differenzialbildung an den Verlauf des Biegewinkels, der erreichte Biegewinkel ermittelt. Darüber lässt sich der bzw. der notwendige Biegewinkel ermitteln, um die Rückfederung auszugleichen.

Die DE 600 00 908 T2 offenbart eine Vorrichtung zum Messen des Biegewinkels und Übertragen des gemessenen Biegewinkels an die Maschinensteuerung. Dies wird mittels eines, als Winkellehre ausgeführten Handgeräts durchgeführt, welches Handgerät Anlegeschenkel aufweist, die an die Biegeschenkel angelegt werden. Der Verdrehwinkel zwischen den Anlegeschenkeln wird ausgelesen, als Winkel dargestellt und an die Steuerung übertragen.

Die US 4,408,471 A offenbart ein Verfahren bzw. eine Vorrichtung zum Unterdrücken der Rückfederung beim Biegevorgang. Mittels Kraftsensoren wird der von der Biegepresse aufgebrachte Pressendruck ermittelt. Ferner wird mittels einer Positionsermittlungsvorrichtung die Position des Biegestempels in Relation zum Biegegesenk bzw. zum umzuformenden Blech ermittelt. Aus dem Kraft-Weg-Diagramm wird die erforderliche Eindringtiefe des Pressenstempels bzw. des Bleches in das Gesenk ermittelt, um ein Rückfedern der Biegeschenkel zu verhindern.

Ferner ist aus der DE 10 2005 012 384 A1 ein Verfahren bekannt, bei dem nach Durchführung des ersten Biegevorgangs der erreichte Biegewinkel gemessen wird. Ferner wird während der Biegeumformung die Pressenkraft und der Verfahrweg des Pressenstempels gemessen und zusammen mit dem zuvor ermittelten Biegewinkel, anhand einer modellbasierten Berechnung, ein Korrekturwert für die Pressenkraft bzw. die Eindringtiefe ermittelt. EP0470263A1 offenbart ein Messverfahren zu Messen der Verformung eines zu biegenden Bleches, wobei in EP0470263A1 kein Strahlenteiler zum Projizieren des Lichtmusters auf beide Seiten des sich von der Arbeitskante erstreckenden Bleches.

WO0128706A1, auf welcher der Oberbegriff des Anspruchs 1 basiert, offenbart die Verwendung mehrerer Lichtquellen auf beiden Seiten der Arbeitskante zum Projizieren des Lichtmusters auf beide Seiten des sich von der Arbeitskante erstreckenden Bleches.

NL1007290C1 offenbart ähnlich zu WO0128706A1 die Anordnung von Lichtquellen auf beiden Seiten der Arbeitskante.

Kontaktbasierte Biegewinkelmessvorrichtungen haben nun den Nachteil, dass bei der Bestimmung des Biegewinkels ein Kontakt zwischen der Messvorrichtung und dem sich aufbiegenden Blech gegeben sein muss, was stets die Gefahr einer möglichen Beschädigung der Messvorrichtung mit sich bringt. Ferner offenbart der Stand der Technik Biegewinkelmessvorrichtungen, bei denen frühestens ab dem zweiten gebogenen Blechteil ein korrekter Biegewinkel erreichbar ist. Insbesondere offenbart der Stand der Technik jedoch Vorrichtungen und Verfahren bei denen ein teils bedeutender Umrüstaufwand an der Biegepresse erforderlich ist, um die offenbarte Biegewinkelmessvorrichtung anbringen bzw. verwenden zu können. Dahingehend ist insbesondere auch von Nachteil, dass die bekannten Biegewinkelmessvorrichtungen sehr spezifisch für eine Biegepresse ausgebildet bzw. adaptiert sind, sodass eine Mehrfachverwendung an bzw. für verschiedene Biegepressen zumeist nicht möglich ist. Des Weiteren von Nachteil ist, dass mit den bekannten Vorrichtungen lediglich die Aufbiegung des Biegeschenkels ermittelt wird, wobei am Biegeschenkel keinerlei Materialdeformation durch den niederfahrenden Pressenstempel stattfindet. Die Biegeumformung und damit das wesentliche Ereignis für den zu erreichenden Biegewinkel bzw. die zu vermeidende Rückfederung, findet jedoch zwischen den Biegestempel und dem Biegegesenk statt.

Es ist also Aufgabe der Erfindung eine Messvorrichtung zu schaffen, bei der während der Durchführung der Biegeumformung die erreichte Biegegeometrie und die zu erwartende Rückfederung ermittelt und korrigiert werden kann.

Die Aufgabe der Erfindung wird gelöst durch ein Biegewerkzeug mit einer Biegegeometrie-Messvorrichtung, welches Biegewerkzeug Teil einer Biegewerkzeuganordnung zur Verwendung in einer Biegemaschine ist. Das Biegewerkzeug weist einen Werkzeugkörper mit einer Längserstreckung auf, wobei parallel zur Längserstreckung eine Arbeitskante ausgebildet ist. Ferner spannen die Arbeitskante und eine zur Arbeitskante normale Arbeitsrichtung eine Biegeebene auf. Im Bereich des Werkzeugkörpers ist eine Lichtmuster-Abgabevorrichtung mit einem Strahlteiler, der in einem im Bereich der Arbeitskante angeordneten Auslass angeordnet ist, zur Abgabe eines Lichtmusters zu beiden Seiten der Arbeitskante auf eine Oberfläche eines umzuformenden Blechteils ausgebildet. In einem Endbereich des Werkzeugkörpers ist auch zumindest eine Bilderfassungsvorrichtung angeordnet, welche zur Erfassung einer Projektion des Lichtmusters auf eine Oberfläche ausgebildet ist.

Mit dieser Ausführung ist in vorteilhafter Weise sichergestellt, dass eine Bestimmung der Biegegeometrie möglich ist, ohne dass an einer vorhandenen Biegemaschine wesentliche Umbauten erforderlich sind, da das gegenständliche Unterwerkzeug in einer bestehenden Biegewerkzeuganordnung verwendbar ist bzw. einsetzbar. Ferner ist es von Vorteil, wenn die Biegeumformung nicht durch zusätzliche Anbauten an der Biegemaschine beeinträchtigt wird, sondern die Ermittlung der Biegegeometrie direkt durch ein an der Biegeumformung beteiligtes Biegewerkzeug ermöglicht wird.

Das von der Lichtmuster-Abgabevorrichtung abgegebene Lichtmuster trifft auf die Oberfläche des zu biegenden Blechs auf und wird von dieser gestreut bzw. reflektiert. Jedenfalls wird ein Teil des zurückgeworfenen Lichts von der Bilderfassungsvorrichtung aufgenommen.

Eine Weiterbildung besteht darin, dass die Lichtmuster-Abgabevorrichtung eine Lichtquelle mit einem Strahlformer aufweist. Ein Strahlformer kann bspw. durch eine Optik und gegebenenfalls vorhandene Blende gebildet sein. Bevorzugt soll das Lichtmuster möglichst gerichtet auf die Blechoberfläche gerichtet werden. Die Abstrahlcharakteristik der Lichtquelle kann jedoch ggf. nicht den Anforderungen an ein gerichtetes Lichtbündel genügen, so dass hier eine Strahlformung von Vorteil ist. Somit kann insbesondere auch die Lichtausbeute erhöht und damit die Intensität des Leuchtmusters auf der Blechoberfläche gesteigert werden. Das Leuchtmuster kann auf einer Seite neben der Biegekante in Richtung des Bleches abgegeben werden. Mit dem Strahlteiler ist es möglich, mit nur einer Lichtquelle, ein Lichtmuster zu beiden Seiten der Arbeitskante auf das Blech abzugeben.

Von Vorteil ist eine Ausbildung, nach der die Lichtmuster-Abgabevorrichtung in einer Ausnehmung des Werkzeugkörpers angeordnet ist. Bei der Durchführung der Biegeumformung bzw. beim Einlegen des Bleches, besteht für Vorrichtungen die im Bereich der Biegewerkzeuge angeordnet sind, eine erhöhte Beschädigungsgefahr. Auch können Vorrichtungen am Biegewerkzeug den möglichen Arbeitsbereich des Werkzeugs einschränken. Mit der gegenständlichen Weiterbildung lässt sich gewährleisten, dass die Lichtmuster-Abgabevorrichtung einerseits durch das Biegewerkzeug geschützt ist und andererseits den nutzbaren Biegebereich bei der Aufbiegung des Bleches nicht beeinträchtigt.

Gemäß der Erfindung, ist im Bereich der Arbeitskante ein Auslass für das von der Lichtmuster-Abgabevorrichtung abgegebene Lichtmuster vorgesehen. Da über die Arbeitskante die Presskraft auf das Blechteil einwirkt, wird sich hier auch die Verformung bzw. Umformung des Bleches einstellen. Mit der gegenständlichen Weiterbildung ist gewährleistet, dass in diesem Bereich, das Lichtmuster zuverlässig auf das Blech projiziert werden kann. Eine Weiterbildung besteht auch darin, dass in einer, an die Arbeitskante anschließenden und längs der Arbeitskante ausgerichteten Fläche, eine Eintrittsöffnung vorhanden ist. Diese Ausbildung gewährleistet, dass das auf die Blechoberfläche projizierte Lichtmuster von der Bilderfassungsvorrichtung aufgenommen werden kann.

Diesbezüglich ist nach einer Weiterbildung vorgesehen, dass die Bilderfassungsvorrichtung in der Eintrittsöffnung angeordnet ist. Diese platzsparende Ausführung ermöglicht es, den Abstand zwischen dem projizierten Lichtmuster und der Bilderfassungsvorrichtung möglichst gering zu halten. Dies ist insbesondere für eine zuverlässige Erfassung des projizierten Lichtmusters von Vorteil.

Aufgrund der beschränkten Platzverhältnisse im Werkzeugkörper, insbesondere im Bereich der Arbeitskante, ist gemäß einer Weiterbildung vorgesehen, dass zwischen der Eintrittsöffnung und dem Bilderfassungsvorrichtung ein Lichtlenkelement angeordnet ist. Somit kann die Bilderfassungsvorrichtung im Bereich günstiger Platzverhältnisse im Werkzeugkörper angeordnet werden, ohne die Erfassungsmöglichkeiten einzuschränken.

Ferner ist vorgesehen, dass im Werkzeugkörper eine Auswerteeinheit angeordnet ist. Diese Weiterbildung ermöglicht in vorteilhafter Weise eine vollintegrierte Ausführung des gegenständlichen Unterwerkzeugs, wodurch das gegenständliche Unterwerkzeug besonders einfach in einer bestehenden Biegewerkzeuganordnung integrierbar ist.

Nach einer Weiterbildung ist ferner vorgesehen, dass die Auswerteeinheit ein Bildanalysemodul aufweist. Dieses Modul ist dazu ausgebildet, das erfasste Abbild des Lichtmusters auf der Blechoberfläche zu analysieren und das erfasste Abbild mit dem ursprünglich ausgesandten Lichtmuster zu vergleichen. Insbesondere soll eine Abweichung zwischen dem ausgesandten und dem erfassten Muster ermittelt werden, um daraus die aktuelle Biegegeometrie zu ermitteln. Ferner kann die Auswerteeinheit einen Steuerausgang aufweisen, über welchen einer Maschinensteuerung Kommandos übermittelbar sind, um den Biegevorgang zu beeinflussen. Bevorzugt um bei Erreichen einer gewünschten Biegegeometrie, den Biegevorgang zu beenden.

Es ist ferner möglich, dass der Werkzeugkörper, der Arbeitskante gegenüberliegend, einen Befestigungsfortsatz aufweist, wobei nach einer Weiterbildung vorgesehen ist, dass die Auswerteeinheit mit einer Schnittstelle im Befestigungsfortsatz verbunden ist, welche zur Übertragung von elektrischer Energie und/oder Daten ausgebildet ist. Somit ist eine Versorgung der Biegegeometrie-Messvorrichtung mit elektrischer Energie und eine Übernahme bzw.

Weiterleitung von Signalen der Auswertevorrichtung an eine Maschinensteuerung möglich, ohne dass dafür eine zusätzliche Koppeleinheit erforderlich wäre.

Nach einer Weiterbildung weist das Lichtmuster eine Helligkeitsverteilung auf, welche gitterförmig, streifenförmig oder punktförmig ausgebildet ist. Dies hat den Vorteil, dass ein Muster mit hohem Kontrastverlauf auf die Oberfläche des Bleches projiziert wird, wodurch die Erkennungssicherheit des Biegeverlaufs deutlich verbessert wird.

Nach einer Weiterbildung ist auch vorgesehen, dass die Helligkeitsverteilung deterministisch, stochastisch oder pseudo-stochastisch ausgebildet ist. Bei einer deterministischen Helligkeitsverteilung kann es eventuell vorkommen, dass eine Oberflächenstruktur des Bleches mit dem Helligkeitsmuster interferiert und es so zu einer Verschlechterung der Erfassungsgenauigkeit kommt. Mit einer stochastischen bzw. pseudo-stochastischen Helligkeitsverteilung lässt sich dies vermeiden.

Eine mögliche Ausführung besteht darin, dass das Biegewerkzeug durch ein Oberwerkzeug oder ein Unterwerkzeug einer Biegepresse gebildet ist. Bei einer Biegepresse drückt das Oberwerkzeug, angetrieben vom Pressenbalken der Biegepresse, das Blech in die Gesenkausnehmung des Unterwerkzeugs.

Eine weitere mögliche Ausführung besteht auch darin, dass das Biegewerkzeug durch ein Niederhaltewerkzeug einer Schwenkbiegemaschine gebildet ist. Beim Schwenkbiegen wird das umzuformende Blech vom Niederhaltewerkzeug, welches bevorzugt ein oberes und unteres Niederhaltewerkzeug umfasst, gehalten bzw. geklemmt und von einem Biegewangenwerkzeug die Biegeumformung durchgeführt wird.

Während der Durchführung einer Biegeumformung auf einer Biegemaschine wird vorzugsweise ein zu biegendes Blech in eine Biegewerkzeuganordnung eingelegt, welche Biegewerkzeuganordnung ein gegenständliches Biegewerkzeug aufweist. Die Lichtmuster-Abgabevorrichtung wird aktiviert und somit das Lichtmuster auf eine Oberfläche des zu biegenden Bleches abgegeben. Ferner wird von der Bilderfassungsvorrichtung periodisch das Abbild des Lichtmusters auf der Blechoberfläche erfasst. Das erfasste Abbild wird vom Bildanalysemodul aufbereitet und analysiert und daraus ein Ist-Biegeverlauf ermittelt. Von einem Vergleichsmodul wird der aktuelle Ist-Biegeverlauf mit einem hinterlegten Soll-Biegeverlauf verglichen, und bei Erreichen des Soll-Biegeverlaufs, die Biegeumformung gestoppt.

Mit dieser Ausbildung lässt sich gewährleisten, dass während der Durchführung der Biegeumformung, die aktuell erreichte Biegegeometrie ermittelt werden kann. Durch Vergleich mit der zu erreichenden Soll-Biegegeometrie wird die Biegeumformung genau solange durchgeführt, bis die geforderte Biegegeometrie erreicht ist.

Vorzugsweise wird vom Bildanalysemodul eine Stereoskopische Bildanalyse durchgeführt. Dies hat den Vorteil, dass kontaktlos eine Bestimmung des Oberflächenverlauf, insbesondere eines Abstandsverlaufs, zur Bilderfassungsvorrichtung durchgeführt werden kann.

Vorzugsweise wird für einen, sich durch die Krafteinwirkung des Biegewerkzeugs krümmenden Abschnitts des Bleches, in Normalrichtung zur Biegekante, eine Tangente an die Krümmungskurve gebildet. Durch die Tangentenbildung kann bereits früh im Biegevorgang ein Rückschluss auf den zu erwartenden Biegewinkel bzw. die sich ausbildende Schenkellänge getroffen werden. Beim Freibiegen wird sich durch die Pressenkraft des niederfahrenden Biegewerkzeugs das Blech zwischen dem Druckpunkt des Biegewerkzeugs und den Auflagepunkten des Unterwerkzeugs deformieren. Diese Deformation wird nicht geradlinig erfolgen, sondern es wird sich zwischen Druckpunkt und Auflagepunkt(en) ein Krümmungsverlauf einstellen, der ganz wesentlich von den Materialeigenschaften und den Biegeparametern abhängt. Der sich einstellende Deformationsverlauf kann bspw. durch eine lineare Approximation in Form einer Tangentenbildung dargestellt werden, um daraus einfach die erreichte Biegegeometrie ableiten zu können. Beim Schwenkbiegen wird das Blech vom Niederhaltewerkzeug geklemmt und vom Biegewangenwerkzeug um den Klemmpunkt gebogen, wodurch es ebenfalls zu einem Deformationsverlauf zwischen Niederhaltewerkzeug und Biegewangenwerkzeug kommen wird. Da aus dem Krümmungsverlauf zwischen Druckpunkt und Auflagepunkt bzw. zwischen Klemmpunkt und Biegewange, auf die erreichbare bzw. erreichte Biegegeometrie geschlossen (extrapoliert) werden kann, ist bereits während des Biegevorgangs eine Abweichung von der geforderten Biegegeometrie erkennbar und kann ggf. eine Korrektur durchgeführt werden.

Neben der Ermittlung der aktuellen Biegegeometrie ist es von Vorteil, wenn gemäß einer Weiterbildung vom Bildanalysemodul aus dem erfassten Abbild, durch Differenzbild-Analyse, ein Bewegungsvektor ermittelt wird. Durch die Biegeumformung wird das Blech vom Biegewerkzeug in das Unterwerkzeug gedrückt, wodurch es auch zu einer Bewegung des Blechs in die Ausnehmung des Unterwerkzeugs kommen wird. Der grundsätzliche Aufbau eines Unterwerkzeugs wird dazu als bekannt vorausgesetzt. Über diesen Bewegungsvektor kann bereits während der Biegeumformung auf den zu erwartenden Einzug des Bleches in das Unterwerkzeug und damit auf die sich einstellende Verkürzung des Biegeschenkels geschlossen werden.

Zum besseren Verständnis der Erfindung wird diese anhand der nachfolgenden Figuren näher erläutert.

Es zeigen jeweils in stark vereinfachter, schematischer Darstellung:
- Fig. 1: eine Schnittdarstellung des gegenständlichen Biegewerkzeugs in der Ausführung als Oberwerkzeug einer Biegepresse;
- Fig. 2: eine Prinzipdarstellung des gegenständlichen Biegewerkzeugs in der Ausführung als Niederhaltewerkzeug einer Schwenkbiegemaschine;
- Fig. 3: a) und b) die Veränderung des auf die Blechoberfläche abgegebenen Lichtmusters beim Biegevorgang.

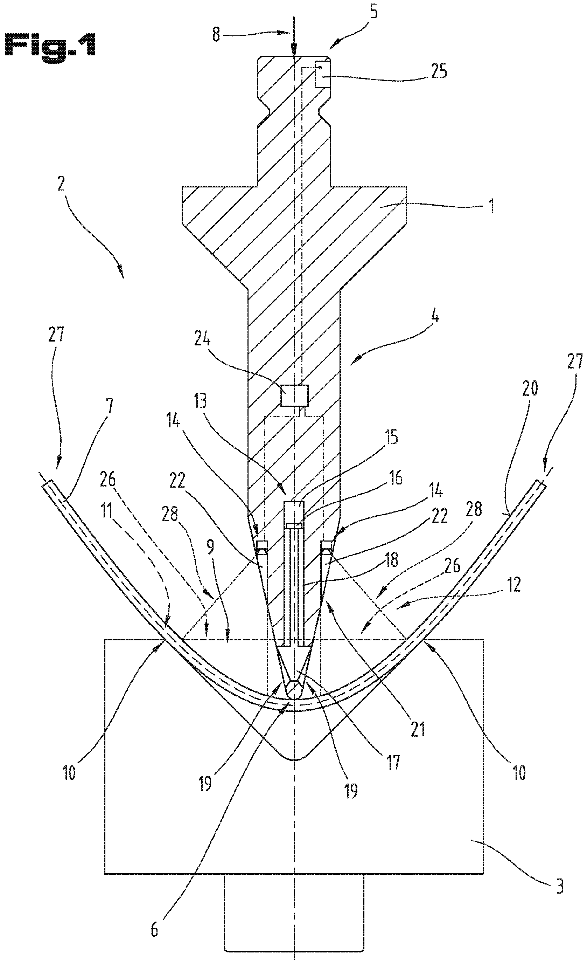

Fig. 1 zeigt ein gegenständliches Biegewerkzeug 1 einer Biegewerkzeuganordnung 2, welche Biegewerkzeuganordnung 2 neben dem Biegewerkzeug 1 auch ein Unterwerkzeug 3 umfasst. Die dargestellte Biegewerkzeuganordnung 2 ist in einer Biegepresse angeordnet, insbesondere ist das Biegewerkzeug 1 an einem Pressenbalken und das Unterwerkzeug 3 an einem Pressentisch der Biegepresse angeordnet. Aus Vereinfachungsgründen und da es für die gegenständliche Beschreibung keine Relevanz hat, sind diese und weitere Komponenten der Biegepresse nicht dargestellt.

Das Biegewerkzeug 1 weist einen Werkzeugkörper 4 auf, ferner weist der Werkzeugkörper 4 einen Befestigungsfortsatz 5 auf, über welchen das Biegewerkzeug mit dem Pressenbalken der Biegepresse verbunden wird. Dem Befestigungsfortsatz gegenüberliegend weist der Werkzeugkörper 4 eine Arbeitskante 6 auf, über welche Arbeitskante 6 die von der Biegepresse auf das Biegewerkzeug 1 aufgebrachte Kraft 8 in das umzuformende Blech 7 gelenkt wird. Dadurch wird das Blech 7 in eine Gesenkausnehmung 9 des Unterwerkzeugs 3 gedrückt.

Im Abschnitt zwischen der Arbeitskante 6 des Biegewerkzeugs 1 und den Anlegekanten 10 des Unterwerkzeugs 3, kommt es zu einer Umformung des Bleches 7, was zu einem nicht linearen Biegeverlauf 11 bzw. Oberflächenverlauf führen wird. Außerhalb des Unterwerkzeugs 3, im Wesentlichen ab der Anlegekante 10, wird der Biegeverlauf 11 linear sein, da hier das Blech nicht mehr umgeformt wird, sondern als Resultat der in der Gesenkausnehmung 9 gegebenen Biegeumformung quasi um den Drehpunkt an der Anlegekante 10 nach oben aufschwenken wird.

In einem Endbereich 12 des Werkzeugkörpers 4 ist eine Lichtmuster-Abgabevorrichtung 13 und eine Bilderfassungsvorrichtung 14 angeordnet. Bevorzugt weist die Lichtmuster-Abgabevorrichtung 13 eine Lichtquelle 15 mit einem Strahlformer 16 und einem Strahlteiler 17 auf. Insbesondere ist vorgesehen, dass die Lichtmuster-Abgabevorrichtung 13 in einer Ausnehmung 18 des Werkzeugkörpers 4 angeordnet ist. Das von der Lichtmuster-Abgabevorrichtung 13 erzeugte Lichtmuster 26 wird über einen, im Bereich der Arbeitskante 6 angeordneten Auslass 19 in Richtung der Oberfläche 20 des umzuformenden Bleches 7 abgegeben.

Das abgegebene Lichtmuster 26 wird von der Blechoberfläche 20 reflektiert bzw. gestreut, sodass Anteile davon auch in den Erfassungsbereich 28 der Bilderfassungsvorrichtung 14 gelangen. Gemäß einer Weiterbildung ist daher vorgesehen, dass in einer, an die Arbeitskante 6 anschließenden Fläche 21 eine Eintrittsöffnung 22 vorgesehen ist. Es ist nun möglich, dass die Bilderfassungsvorrichtung 14 in der Eintrittsöffnung 22 angeordnet ist, oder dass zwischen der Eintrittsöffnung 22 und der Bilderfassungsvorrichtung 14 ein Lichtlenkelement angeordnet ist. Da im Endbereich 12 des Werkzeugkörpers 4 sehr beengte Platzverhältnisse herrschen, hat die letztere Ausführung den Vorteil, dass eine Verlagerung der Bilderfassungsvorrichtung 14 zurück in den Werkzeugkörper 4 eine statischen Verbesserung bringt. Wesentlich ist jedoch, dass der Erfassungsbereich der Bilderfassungsvorrichtung 14 den von der Lichtmuster-Abgabevorrichtung 13 beleuchteten Oberflächenabschnitt auf der Blechoberfläche 20 erfassen kann.

Ferner kann vorgesehen sein, dass im Werkzeugkörper 4 eine Auswerteeinheit 24 angeordnet ist, in welcher Auswerteeinheit 24 gegebenenfalls ein Bildanalysemodul vorgesehen ist. Bevorzugt wird die Auswerteeinheit 24 mit einer Schnittstelle 25 im Befestigungsfortsatz 5 des Werkzeugkörpers 4 verbunden sein.

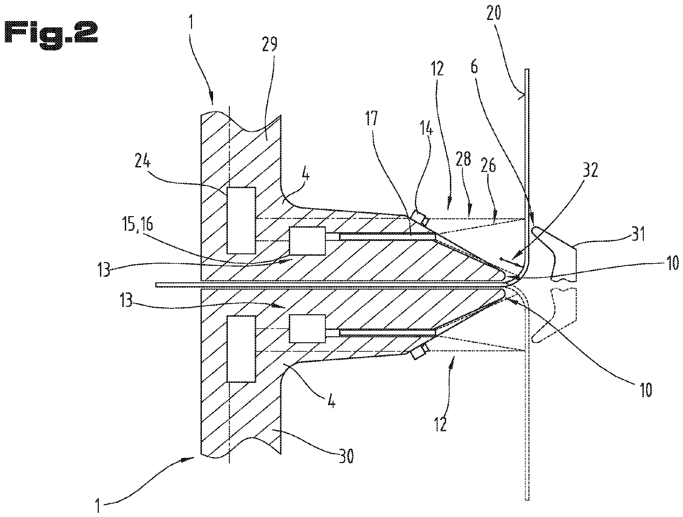

Figur 2 zeigt das gegenständliche Biegewerkzeug 1 in der Ausführungsvariante für eine Schwenkbiegemaschine. Insbesondere ist das Biegewerkzeug 1 als oberes 29 und/oder unteres 30 Niederhaltewerkzeug ausgebildet. Bei der Biegeumformung wird das umzuformende Blech 7 zwischen den Niederhaltewerkzeugen 29, 30 geklemmt und somit relativ zur Anlegekante 10 fixiert. Das Biegewangenwerkzeug 31 wird von der Steuerung der Biegemaschine bis zum Kontakt an das Blech herangefahren, wodurch sich wieder zwei Anlegekanten 10 ausbilden, einmal am Niederhaltewerkzeug 29, 30 und an der Arbeitskante 6 des Biegewangenwerkzeugs 31. Bei der Biegeumformung wird das Biegewangenwerkzeug um den ermittelten Winkel verschwenkt, wodurch es zwischen den Anlegekanten 10 zur einer Verformung des Bleches kommt. Dabei sollte sich gemäß dem mathematischen Modell der Biegeumformung, eine Soll-Biegelinie ausbilden. Aufgrund real schwankender Materialparameter des Bleches 7 kann die Biegelinie vom berechneten Verlauf abweichen und sich somit auch ein abweichender Biegeradius 32 bilden. Zur Vereinfachung wird von einem Radius gesprochen, obwohl die tatsächliche der Biegelinie zumeist höherer Ordnung sein wird.

Da jedoch der Verlauf der Biegelinie zwischen den Anlegekanten 10 von entscheidender Bedeutung für die Ausbildung einer korrekten Länge des Biegeschenkels 27 ist, ist auch hier im Endbereich 12 des Werkzeugkörpers 4 des Biegewerkzeugs 1, eine Lichtmuster-Abgabevorrichtung 13 vorgesehen. Ähnlich wie zuvor für das Biegewerkzeug einer Biegepresse, wird auch hier von der Lichtmuster-Abgabevorrichtung 13 ein Lichtmuster 26 auf die Oberfläche 20 des Bleches 7 abgegeben, und das projizierte Abbild auf der Blechoberfläche 20, von der Bilderfassungsvorrichtung 14 erfasst. Für die weitere Beschreibung wird auf obige Beschreibung der Situation bei der Biegepresse verwiesen, da die grundlegendenden Merkmale und Funktionalitäten gleich sind. Der Fachmann wird hier in der Lage sein, die Situation bei einer Biegepresse auf die Situation beim Schwenkbiegen umzulegen.

Bevorzugt wird ein stereoskopisches Messverfahren verwendet, bei dem von der Lichtmuster-Abgabevorrichtung ein Lichtmuster abgegeben, bevorzugt Lichtpunkte oder ein Linienmuster, und deren projiziertes Abbild auf der Blechoberfläche von der Bilderfassungsvorrichtung erfasst wird. Durch genaue Kenntnis der örtlichen Relation zwischen Lichtmuster-Abgabevorrichtung und Bilderfassungsvorrichtung, kann aus den Abständen der Lichtpunkte und der Position im Erfassungsbereich, auf den Abstand zwischen Bilderfassungsvorrichtung und Blechoberfläche geschlossen werden. Vom Auswertemodul wird dazu für eine Mehrzahl von Punkten der Abstand zwischen der Bilderfassungsvorrichtung und der Projektion des Punktes auf der Blechoberfläche ermittelt. Auf die weitere Beschreibung wird verzichtet, da das Messprinzip einer stereoskopischen Abstandsmessung als bekannt angenommen wird.

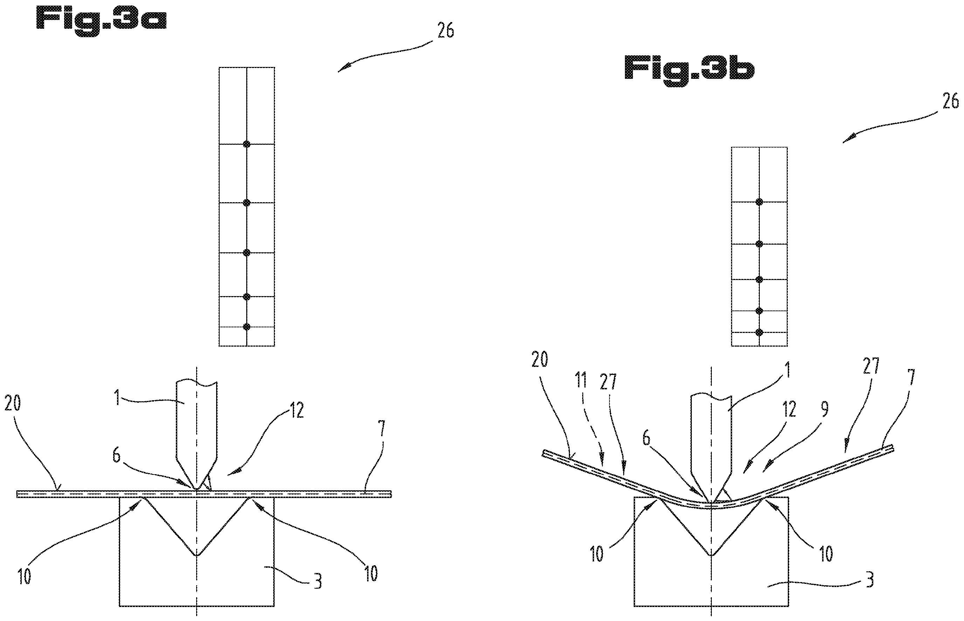

Figur 3a zeigt die Situation bei einem ungebogenen Blech. Das Gitter dient lediglich der Veranschaulichung der auftretenden Verkürzung während des Biegevorgangs.

Durch das sich aufbiegende Blech kommt die Blechoberfläche näher an die Lichtmuster-Abgabevorrichtung und insbesondere näher an die Bilderfassungsvorrichtung, sodass es zu einer Stauchung der Messpunkte (des Messgitters) kommen wird. Diese Situation ist in Fig. 3b dargestellt.

Durch die kontinuierliche oder zyklische Ermittlung des Abstandes zwischen dem Biegewerkzeug 1, insbesondere dem Endbereich 12, und der Blechoberfläche während des Biegevorgangs, kann der genaue Verlauf der Biegelinie zwischen den Anlegekanten ermittelt werden. Aus dieser Biegelinie kann nun vom Auswertemodul und/oder der Maschinensteuerung, gemäß dem mathematischen Modell der Biegeumformung zurück auf die Länge des sich ausbildenden Schenkels geschlossen werden. Wird hierbei eine Abweichung vom Soll-Biegeverlauf erkannt, kann der Biegevorgang rechtzeitig korrigiert werden, um eine Fehlbiegung zu vermeiden.

Da aus dem sich ändernden Biegeverlauf 11 auf Spannungen und Kraftverhältnisse im Blech im Bereich der Gesenkausnehmung 9, bzw. zwischen den Anlegekanten 10, geschlossen werden kann, ist es somit insbesondere möglich, neben der sich ausbildenden Schenkellänge, durch Tangentenbildung an den Biegeverlauf 11, sowohl den Biegewinkel, als auch die zu erwartende Rückfederung zu bestimmen.

Der Vorteil des gegenständlichen Biegewerkzeugs liegt nun insbesondere darin, dass kontaktlos und während der Durchführung der Biegeumformung, die sich einstellende Biegegeometrie, insbesondere die sich aufgrund des Einzugs zwischen den Anlegekanten 10 ausbildende Schenkellänge und die zu erwartende Rückfederung ermittelt und entsprechend korrigiert werden kann.

In den Figuren bzw. in der obigen Beschreibung ist erfindungsgemäss dargestellt, dass vom Biegewerkzeug 1 das Lichtmuster 26 zu beiden Seiten der Arbeitskante 6 auf die Blechoberfläche 20 abgegeben wird. Dazu sind zwei Auslässe 19, zwei Eintrittsöffnungen 22, zwei Bilderfassungsvornchtungen 14 und ein entsprechend ausgebildeter Strahlteiler 17 vorgesehen.

Abschließend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus des Biegewerkzeugs dieses bzw. dessen Bestandteile teilweise unmaßstäblich und/oder vergrößert und/oder verkleinert dargestellt wurden.

### Bezugszeichenaufstellung

| | | | |
|---|---|---|---|
| 1 | Biegewerkzeug | 31 | Biegewangenwerkzeug |
| 2 | Biegewerkzeuganordnung | 32 | Biegeradius |
| 3 | Unterwerkzeug | | |
| 4 | Werkzeugkörper | | |
| 5 | Befestigungsfortsatz | | |
| 6 | Arbeitskante | | |
| 7 | Blech | | |
| 8 | Kraft | | |
| 9 | Gesenkausnehmung | | |
| 10 | Anlegekante | | |
| 11 | Biegeverlauf | | |
| 12 | Endbereich | | |
| 13 | Lichtmuster-Abgabevorrichtung | | |
| 14 | Bilderfassungsvorrichtung | | |
| 15 | Lichtquelle | | |
| 16 | Strahlformer | | |
| 17 | Strahlteiler | | |
| 18 | Ausnehmung | | |
| 19 | Auslass | | |
| 20 | Blechoberfläche | | |
| 21 | Fläche | | |
| 22 | Eintrittsöffnung | | |
| 23 | | | |
| 24 | Auswerteeinheit | | |
| 25 | Schnittstelle | | |
| 26 | Lichtmuster | | |
| 27 | Biegeschenkel | | |
| 28 | Erfassungsbereich | | |
| 29 | Oberes Niederhaltewerkzeug | | |
| 30 | Unteres Niederhaltewerkzeug | | |

## Patentansprüche

1. Biegewerkzeug (1) mit einer Biegegeometrie-Messvorrichtung, welches Biegewerkzeug (1) Teil einer Biegewerkzeuganordnung (2) zur Verwendung in einer Biegemaschine ist, wobei das Biegewerkzeug (1) einen Werkzeugkörper (4) mit einer Längserstreckung aufweist, wobei parallel zur Längserstreckung eine Arbeitskante (6) ausgebildet ist, und wobei die Arbeitskante (6) und eine zur Arbeitskante (6) normale Arbeitsrichtung eine Biegeebene aufspannen,
**dadurch gekennzeichnet, dass** in einem Endbereich (12) des Werkzeugkörpers (4)
- eine Lichtmuster-Abgabevorrichtung (13) mit einem Strahlteiler (17), der in einem im Bereich der Arbeitskante (6) angeordneten Auslass (19) angeordnet ist, zur Abgabe eines Lichtmusters (26) zu beiden Seiten der Arbeitskante (6) auf eine Oberfläche (20) eines umzuformenden Blechteils
- und zumindest eine Bilderfassungsvorrichtung (14), zur Erfassung einer Projektion des Lichtmusters (26) auf der Oberfläche (20), angeordnet ist.

2. Biegewerkzeug nach Anspruch 1, **dadurch gekennzeichnet, dass** die Lichtmuster-Abgabevorrichtung (13) eine Lichtquelle (15) mit einem Strahlformer (16) aufweist.

3. Biegewerkzeug nach einem der Ansprüche 1 oder 2, **dadurch gekennzeichnet, dass** die Lichtmuster-Abgabevorrichtung (13) in einer Ausnehmung (18) des Werkzeugkörpers (4) angeordnet ist.

4. Biegewerkzeug nach einem der Ansprüche 1 bis 3, **dadurch gekennzeichnet, dass** im Bereich der Arbeitskante (6) ein Auslass (19) für das von der Lichtmuster-Abgabevorrichtung (13) abgegebene Lichtmuster (26) vorgesehen ist.

5. Biegewerkzeug nach einem der Ansprüche 1 bis 4, **dadurch gekennzeichnet, dass** in einer, an die Arbeitskante (6) anschließenden und längs der Arbeitskante (6) ausgerichteten Fläche (21), eine Eintrittsöffnung (22) vorhanden ist.

6. Biegewerkzeug nach Anspruch 5, **dadurch gekennzeichnet, dass** die Bilderfassungsvorrichtung (14) in der Eintrittsöffnung (22) angeordnet ist.

7. Biegewerkzeug nach Anspruch 6, **dadurch gekennzeichnet, dass** zwischen der Eintrittsöffnung (22) und der Bilderfassungsvorrichtung (14) ein Lichtlenkelement angeordnet ist.

8. Biegewerkzeug nach einem der Ansprüche 1 bis 7, **dadurch gekennzeichnet, dass** im Werkzeugkörper (4) eine Auswerteeinheit (24) angeordnet ist.

9. Biegewerkzeug nach Anspruch 8, **dadurch gekennzeichnet, dass** die Auswerteeinheit (24) ein Bildanalysemodul aufweist.

10. Biegewerkzeug nach Anspruch 8 oder 9, wobei der Werkzeugkörper (4), der Arbeitskante (6) gegenüberliegend, einen Befestigungsfortsatz (5) aufweist, **dadurch gekennzeichnet, dass** die Auswerteeinheit (24) mit einer Schnittstelle (25) im Befestigungsfortsatz (5) verbunden ist, welche zur Übertragung von elektrischer Energie und/oder Daten ausgebildet ist.

11. Biegewerkzeug nach einem der Ansprüche 1 bis 10, **dadurch gekennzeichnet, dass** das Lichtmuster (26) eine Helligkeitsverteilung aufweist, welche gitterförmig, streifenförmig oder punktförmig ausgebildet ist.

12. Biegewerkzeug nach Anspruch 11, **dadurch gekennzeichnet, dass**, die Helligkeitsverteilung deterministisch, stochastisch oder pseudo-stochastisch ausgebildet ist.

13. Biegewerkzeug nach einem der Ansprüche 1 bis 12, **dadurch gekennzeichnet, dass** das Biegewerkzeug durch ein Oberwerkzeug oder ein Unterwerkzeug einer Biegepresse gebildet ist.

14. Biegewerkzeug nach einem der Ansprüche 1 bis 13, **dadurch gekennzeichnet, dass** das Biegewerkzeug durch ein Niederhaltewerkzeug einer Schwenkbiegemaschine gebildet ist.

## Claims

1. A bending tool (1) with a bending geometry measuring device, which bending tool (1) is part of a bending tool arrangement (2) for use in a bending machine, wherein the bending tool (1) has a tool body (4) with a longitudinal extension, wherein a working edge (6) is formed parallel to the longitudinal extension, and wherein the working edge (6) and a working direction normal to the working edge (6) span a bending plane, **characterized in that** in an end region (12) of the tool body (4)
- a light pattern emitting device (13) with a beam splitter (17), which is arranged in an outlet (19) arranged in the region of the working edge (6), for emitting a light pattern (26) on both sides of the working edge (6) onto a surface (20) of a sheet metal part to be formed
- and at least one image capturing device (14), for capturing a projection of the light pattern (26) on the surface (20), is provided.

2. The bending tool according to claim 1, **characterized in that** the light pattern emitting device (13) comprises a light source (15) with a beam former (16).

3. The bending tool according to one of claims 1 or 2, **characterized in that** the light pattern emitting device (13) is disposed in a recess (18) of the tool body (4).

4. The bending tool according to one of claims 1 to 3, **characterized in that** an outlet (19) for the light pattern (26) emitted by the light pattern emitting device (13) is provided in the region of the working edge (6).

5. The bending tool according to one of claims 1 to 4, **characterized in that** an inlet opening (22) is provided in a surface (21) adjoining the working edge (6) and aligned along the working edge (6).

6. The bending tool according to claim 5, **characterized in that** the image capturing device (14) is arranged in the inlet opening (22).

7. The bending tool according to claim 6, **characterized in that** a light deflecting element is arranged between the inlet opening (22) and the image capturing device (14).

8. The bending tool according to one of claims 1 to 7, **characterized in that** an evaluation unit (24) is arranged in the tool body (4).

9. The bending tool according to claim 8, **characterized in that** the evaluation unit (24) comprises an image analysis module.

10. The bending tool according to claim 8 or 9, wherein the tool body (4), opposite the working edge (6), has a fastening extension (5), **characterized in that** the evaluation unit (24) is connected to an interface (25), which is configured to transmit electrical energy and/or data, in the fastening extension (5).

11. The bending tool according to one of claims 1 to 10, **characterized in that** the light pattern (26) has a brightness distribution which is configured to have a grid-like, strip-like or point-like shape.

12. The bending tool according to claim 11, **characterized in that** the brightness distribution is deterministic, stochastic or pseudo-stochastic.

13. The bending tool according to one of claims 1 to 12, **characterized in that** the bending tool is formed by an upper tool or a lower tool of a bending press.

14. The bending tool according to one of claims 1 to 13, **characterized in that** the bending tool is formed by a holding-down tool of a swivel bending machine.

## Revendications

1. Outil de pliage (1) avec un dispositif de mesure de géométrie de pliage, cet outil de pliage (1) faisant partie d'une disposition d'outil de pliage (2) utilisée dans une machine de pliage, dans lequel l'outil de pliage (1) comprend un corps d'outil (4) avec une extension longitudinale, dans lequel, parallèlement à l'extension longitudinale, est réalisée une arête de travail (6) et dans lequel l'arête de travail (6) et une direction de travail normale par rapport à l'arête de travail (6) définissent un plan de pliage, **caractérisé en ce que**, dans une zone d'extrémité (12) du corps d'outil (4), sont disposés
- un dispositif d'émission de motif lumineux (13) avec un diviseur de faisceau (17), qui est disposé dans une sortie (19) disposée au niveau de l'arête de travail (6), pour l'émission d'un motif lumineux (26) des deux côtés de l'arête de travail (6) sur une surface (20) d'une pièce de tôle à déformer
- et au moins un dispositif de détection d'image (14) pour la détection d'une projection du motif lumineux (26) sur la surface (20).

2. Outil de pliage selon la revendication 1, **caractérisé en ce que** le dispositif d'émission de motif lumineux (13) comprend une source de lumière (15) avec un conformateur de faisceau (16).

3. Outil de pliage selon l'une des revendications 1 ou 2, **caractérisé en ce que** le dispositif d'émission de motif lumineux (13) est disposé dans un évidement (18) du corps d'outil (4).

4. Outil de pliage selon l'une des revendications 1 à 3, **caractérisé en ce que**, au niveau de l'arête de travail (6), est prévue une sortie (19) pour le motif lumineux (26) émis par le dispositif d'émission de motif lumineux (13).

5. Outil de pliage selon l'une des revendications 1 à 4, **caractérisé en ce que**, dans une surface (21) suivant l'arête de travail (6) et orientée le long de l'arête de travail (6), est prévue une ouverture d'entrée (22).

6. Outil de pliage selon la revendication 5, **caractérisé en ce que** le dispositif de détection d'image (14) est disposé dans l'ouverture d'entrée (22).

7. Outil de pliage selon la revendication 6, **caractérisé en ce que**, entre l'ouverture d'entrée (22) et le dispositif de détection d'image (14), est disposé un élément de guidage de lumière.

8. Outil de pliage selon l'une des revendications 1 à 7, **caractérisé en ce que**, dans le corps d'outil (4) est disposée une unité d'analyse (24).

9. Outil de pliage selon la revendication 8, **caractérisé en ce que** l'unité d'analyse (24) comprend module d'analyse d'image.

10. Outil de pliage selon la revendication 8 ou 9, dans lequel le corps d'outil (4) comprend, en face de l'arête de travail (6), un prolongement de fixation (5), **caractérisé en ce que** l'unité d'analyse (24) est reliée avec une interface (25), dans le prolongement de fixation (5), qui est conçue pour la transmission d'énergie électrique et/ou de données.

11. Outil de pliage selon l'une des revendications 1 à 10, **caractérisé en ce que** le motif lumineux (26) comprend un dispositif de répartition de la luminosité qui présente la forme d'une grille, d'une bande ou d'un point.

12. Outil de pliage selon la revendication 11, **caractérisé en ce que** le dispositif de répartition de la luminosité est conçu de manière déterministe, stochastique ou pseudo-stochastique.

13. Outil de pliage selon l'une des revendications 1 à 12, **caractérisé en ce que** l'outil de pliage est constitué d'un outil supérieur ou d'un outil inférieur d'une presse plieuse.

14. Outil de pliage selon l'une des revendications 1 à 13, **caractérisé en ce que** l'outil de pliage est constitué d'un serre-flanc d'une machine de pliage pivotante.
